# FASCICULE DE BREVET EUROPEEN

(11) **EP 2 542 375 B1**
(45) Date de publication et mention de la délivrance du brevet: **12.08.2020**
(21) Numéro de dépôt: 11712609.4
(22) Date de dépôt: 21.02.2011
(51) Int. Cl.: B23K 1/005, B23K 26/14

(54) **PROCEDE ET INSTALLATION DE SOUDO-BRASAGE LASER DE PIECES EN ACIER EN PARTICULIER DE PIECES EN TOLE DE LA CAISSE D'UN VEHICULE AUTOMOBILE**
VORRICHTUNG UND VERFAHREN ZUM LASER-HARTLÖTEN VON STAHL-BAUTEILEN, INSBESONDERE BLECHE EINER KRAFTFAHRZEUGKARROSSERIE
METHOD AND DEVICE FOR LASER BRAZING STEEL PIECES, IN PARTICULAR SHEETS FOR A MOTOR VEHICULE BODY

(30) Priorité: 05.03.2010 FR 1051605
(43) Date de publication de la demande: 09.01.2013
(73) Titulaire: PSA Automobiles SA, 78300 Poissy (FR)
(72) Inventeur: GELABERT ARRIETA, Ignacio, E-28914 Leganes (ES); AUGER, Patrice, F-78650 Beynes (FR)
(74) Mandataire: Fernandez, Francis Lionel
(86) Numéro de dépôt international: PCT/FR2011/050353
(87) Numéro de publication internationale: WO 2011/107692

(56) Documents cités:
- EP-A1- 1 834 725
- DE-A1- 10 327 462
- DE-A1-102007 032 723
- JP-A- 59 070 487

## Description

La présente invention concerne un procédé de soudo-brasage laser de deux pièces en acier.

L'invention concerne également une installation pour la mise en œuvre d'un tel procédé.

L'invention s'applique en particulier au soudo-brasage laser de deux pièces en tôle d'acier de la caisse d'un véhicule automobile.

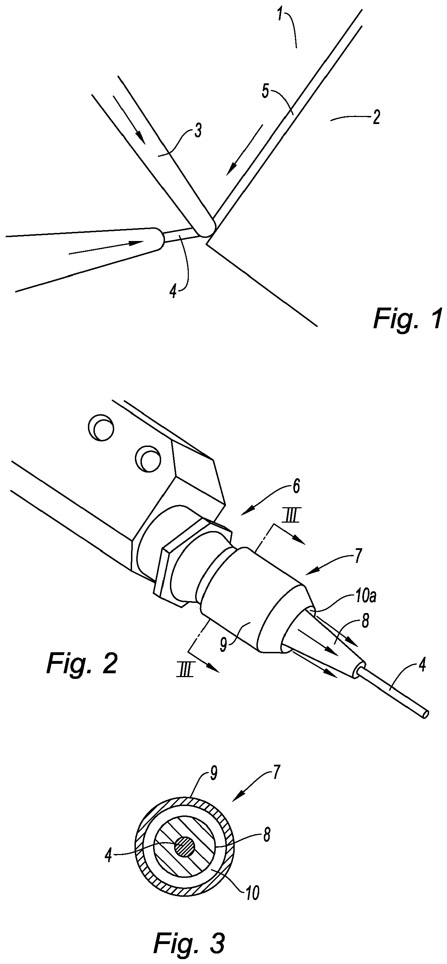

La figure 1 est une vue schématique illustrant un procédé de soudo-brasage laser connu.

Dans ce procédé, on déplace en continu le long de la ligne de jonction entre deux pièces en acier 1, 2 à assembler, un faisceau laser 3 et un fil 4 de métal d'apport, tel que du cuivre.

Lors de ce déplacement, le faisceau laser 3 fait fondre en continu le fil 4 de métal d'apport pour former un cordon de brasage 5 continu entre les deux pièces 1 et 2.

Dans certains procédés de soudo-brasage connus, on souffle vers le cordon de brasage 5 un gaz de protection.

Habituellement, on utilise dans ces procédés en tant que gaz de protection un gaz inerte, tel que l'argon pour éviter l'oxydation du cordon de brasage 5.

Cependant, l'argon est un gaz extrêmement cher, de sorte que son utilisation est économiquement incompatible avec la fabrication de produits industriels en grande série tels que les véhicules automobiles.

Le brevet FR 2 898 529 décrit un procédé de soudo-brasage laser de pièces en acier au moyen d'un fil d'apport en cuivre, dans lequel on souffle sur le cordon de brasage, un mélange gazeux contenant un gaz inerte et 40 à 60% d'oxygène.

Ce procédé est moins onéreux que celui consistant à souffler de l'argon, mais reste néanmoins très coûteux.

Le document DE-A-10 2007 032 723 décrit un procédé de soudo-brasage dans lequel les vapeurs produites sont évacuées par soufflage d'air avec un débit compris entre 20 et 25 l/min.

La demanderesse a effectué des essais de soudo-brasage par laser de deux pièces en acier, sans utiliser aucun gaz de protection.

Lors de ces essais, on a fait varier la puissance du faisceau laser, la vitesse d'avance du faisceau laser et la vitesse du fil de métal d'apport.

Il a été constaté qu'à partir d'une certaine vitesse d'avance du faisceau laser, il était impossible d'obtenir un cordon de brasage ayant un aspect correct et exempt de porosité.

Le but de la présente invention est de remédier aux inconvénients ci-dessus. Ce but est atteint, selon l'invention, grâce à un procédé de selon la revendication 1.

Il a ainsi été constaté de façon surprenante que de l'air comprimé soufflé sur le cordon de brasage permettait d'obtenir des cordons de brasage ayant un aspect correct et dépourvus de porosité.

Ce résultat va à l'encontre des préjugés selon lesquels le gaz de protection devrait contenir un gaz inerte, tel que l'argon.

Ce résultat surprenant rend le procédé selon l'invention peu coûteux et économiquement compatible avec la production en grande série de pièces soudo-brasées par laser.

De préférence, l'air comprimé soufflé sur le cordon de brasage est obtenu au moyen d'un compresseur aspirant de l'air atmosphérique.

Il s'agit ici d'un compresseur tout à fait classique et peu coûteux.

Des cordons de brasage ayant une structure et un aspect tout à fait corrects ont été obtenus en soufflant de l'air comprimé vers le cordon de brasage à une pression comprise entre 1 et 2 bars, c'est-à-dire peu importante et par conséquent peu onéreuse à mettre en œuvre.

Les meilleurs résultats on été obtenus en soufflant l'air comprimé dans une direction coaxiale à celle du fil de métal d'apport.

Selon un autre aspect, l'invention concerne également une installation pour la mise en œuvre du procédé selon l'invention, telle que définie à la revendication 3.

De préférence, ledit dispositif comprend une tête comportant un canal axial de guidage du fil de métal d'apport, cette tête étant entourée par une enveloppe séparée de cette tête par une chambre annulaire comportant une entrée qui est raccordée à la source d'air comprimé et une sortie annulaire située en amont de l'extrémité de ladite tête relativement au sens de la circulation de l'air comprimé.

Selon un autre aspect, l'invention concerne en outre, l'application du procédé ou de l'installation selon l'invention, au soudo-brasage de deux pièces en tôle de la caisse d'un véhicule automobile.

D'autres particularités et avantages de l'invention apparaîtront encore tout au long de la description ci-après.

Aux dessins annexés, donnés à titre d'exemples, non limitatifs :
- la figure 2 est une vue partielle du dispositif de maintien et d'amenée du fil de métal d'apport,
- la figure 3 est une vue en coupe suivant le plan III-III de la figure 2.

Le procédé de soudo-brasage selon l'invention diffère du procédé connu illustré par la figure 1 par le fait que le gaz de protection qui est soufflé sur le cordon de brasage 5 est de l'air comprimé dépourvu de gaz autres que ceux contenus dans l'air atmosphérique.

Ainsi, l'air comprimé soufflé sur le cordon de soudage peut être issu d'un compresseur standard aspirant l'air atmosphérique et dépourvu de filtre d'aspiration et de déshumificateur.

L'air atmosphérique aspiré par le compresseur peut être soufflé vers le cordon de brasage 5 à une pression comprise entre 1 et 2 bars qui est relativement faible.

L'air atmosphérique est après compression soufflé dans une direction coaxiale à celle du fil de métal d'apport 4.

La figure 2 est une vue en perspective partielle du dispositif 6 de maintien et d'amenée du fil de métal d'apport 4.

Ce dispositif 6 intègre une buse 7 de soufflage d'air raccordée à une source d'air comprimé (non représentée).

Ce dispositif 6 comprend une tête 8 effilée vers l'avant comportant un canal axial de guidage du fil de métal d'apport 4.

Cette tête 8 est entourée (voir notamment la figure 3) par une enveloppe 9 qui est séparée de la tête 8 par une chambre annulaire 10.

Cette chambre annulaire 10 comporte une entrée (non représentée) qui est raccordée à la source d'air comprimé et une sortie annulaire 10a (voir figure 2) située en amont de l'extrémité de la tête 8 relativement au sens de la circulation de l'air comprimé.

La chambre annulaire 10 permet ainsi de souffler de l'air comprimé vers le cordon de brasage 5 coaxialement au fil 4, comme montré par les flèches représentées sur la figure 2.

Le dispositif 6 d'amenée du fil d'apport 4 et de soufflage d'air présente l'avantage d'être très compact, de sorte qu'il peut être disposé relativement près du faisceau laser 3.

On donne ci-après les principales caractéristiques d'une installation de soudo-brasage laser selon l'invention.
Puissance du faisceau laser 3 : 2800 W
Diamètre du faisceau laser 3 : 2,6 mm
Nature du fil de métal d'apport 4 : Cu Si₃
Vitesse de déplacement du fil de métal d'apport 4 : 4,8/min
Pression de soufflage de l'air comprimé : 1,5 bars
Débit de l'air comprimé : 45l/min.

Une installation de soudo-brasage ayant ces caractéristiques a permis de souder des pavillons sur la caisse d'un véhicule automobile au moyen de cordons de brasage d'aspect et de structure tout à fait satisfaisants et ne nécessitant aucune retouche ultérieure.

L'utilisation de l'air comprimé en tant que gaz de protection rendent le procédé et l'installation de soudo-brasage selon l'invention parfaitement compatibles avec les impératifs économiques liés à la production en grande série des véhicules automobiles.

## Revendications

1. Procédé de soudo-brasage de deux pièces en acier (1, 2) dans lequel on déplace en continu le long de la ligne de jonction entre les deux pièces (1, 2) un faisceau laser (3) et un fil de métal d'apport (4) de telle sorte que ce faisceau laser (3) fasse fondre en continu le fil de métal d'apport (4) pour former un cordon de brasage (5) continu entre les deux pièces (1, 2) et dans lequel on souffle vers le cordon de brasage un gaz de protection, ce gaz de protection étant de l'air dépourvu de gaz autres que ceux contenus dans l'air atmosphérique, **caractérisé en ce que** l'air est de l'air comprimé qui est soufflé vers le cordon de brasage (5) à une pression comprise entre 1 et 2 bars et dans une direction coaxiale à celle du fil de métal d'apport (4)

2. Procédé de soudo-brasage selon la revendication 1, **caractérisé en ce que** l'air comprimé est obtenu au moyen d'un compresseur aspirant de l'air atmosphérique.

3. Installation pour la mise en œuvre du procédé selon l'une des revendications 1 et 2, comprenant un dispositif laser et un dispositif (6) de maintien et d'amenée du fil de métal d'apport (4), **caractérisée en ce que** ce dispositif de maintien et d'amenée de fil d'apport intègre une buse (7) de soufflage d'air à une pression comprise entre 1 et 2 bars dans une direction coaxiale à celle du fil d'apport raccordée à une source d'air comprimé.

4. Installation selon la revendication 3, **caractérisée en ce que** ledit dispositif (6) comprend une tête (8) comportant un canal axial de guidage du fil de métal d'apport (4), cette tête (8) étant entourée par une enveloppe (9) séparée de cette tête (8) par une chambre annulaire (10) comportant une entrée qui est raccordée à la source d'air comprimé et une sortie annulaire (10a) située en amont de l'extrémité de ladite tête (8) relativement au sens de la circulation de l'air comprimé.

5. Application du procédé selon l'une des revendications 1 et 2 ou de l'installation selon l'une des revendications 3 ou 4, au soudo-brasage laser de deux pièces (1, 2) en tôle de la caisse d'un véhicule automobile.

## Patentansprüche

1. Verfahren zum Hartlötschweißen von zwei Stahlwerkstücken (1, 2), bei dem ein Laserstrahl (3) und ein Zusatzmetalldraht (4) kontinuierlich entlang der Verbindungslinie zwischen den beiden Werkstücken (1, 2) derart bewegt werden, daß dieser Laserstrahl (3) den Zusatzmetalldraht (4) kontinuierlich schmilzt, um eine kontinuierliche Hartlötwulst (5) zwischen den beiden Werkstücken (1) zu bilden, 2) und bei dem ein Schutzgas gegen die Lötschnur geblasen wird, wobei dieses Schutzgas Luft ist, die frei von anderen Gasen als denen ist, die in atmosphärischer Luft enthalten sind, **dadurch gekennzeichnet, daß** die Luft Druckluft ist, die mit einem Druck zwischen 1 und 2 bar und in einer Richtung koaxial zu der des Lotdrahtes (4) gegen die Lötschnur (5) geblasen wird.

2. Verfahren zum Hartlöten nach Anspruch 1, **dadurch gekennzeichnet, daß** die Druckluft mit Hilfe eines Kompressors gewonnen wird, der atmosphärische Luft ansaugt.

3. Anlage zur Durchführung des Verfahrens nach einem der Ansprüche 1 und 2 mit einer Laservorrichtung und einer Vorrichtung (6) zum Halten und Zuführen des Schweißdrahts (4), **dadurch gekennzeichnet, daß** die Vorrichtung (6) zum Halten und Zuführen des Schweißdrahts (4) eine Düse (7) zum Blasen von Luft mit einem Druck zwischen 1 und 2 bar in einer Richtung koaxial zu der des Schweißdrahts aufweist, die mit einer Druckluftquelle verbunden ist.

4. Anlage nach Anspruch 3, **dadurch gekennzeichnet, dass** die genannte Vorrichtung (6) einen Kopf (8) mit einem axialen Kanal zur Führung des Schweißzusatzwerkstoffdrahtes (4) umfasst, wobei dieser Kopf (8) von einem Gehäuse (9) umgeben ist, das von diesem Kopf (8) durch eine ringförmige Kammer (10) getrennt ist, die einen mit der Druckluftquelle verbundenen Eingang und einen ringförmigen Ausgang (10a) aufweist, der in Bezug auf die Strömungsrichtung der Druckluft stromaufwärts vom Ende des genannten Kopfes (8) angeordnet ist.

5. Anwendung des Verfahrens nach einem der Ansprüche 1 und 2 oder der Anlage nach einem der Ansprüche 3 oder 4 auf das Laserhartlöten von zwei Blechteilen (1, 2) der Karosserie eines Kraftfahrzeugs.

## Claims

1. A method of braze welding two steel workpieces (1, 2) in which a laser beam (3) and a filler metal wire (4) are continuously moved along the junction line between the two workpieces (1, 2) in such a way that this laser beam (3) continuously melts the filler metal wire (4) to form a continuous braze bead (5) between the two workpieces (1), 2) and in which a shielding gas is blown towards the brazing cord, this shielding gas being air free of gases other than those contained in atmospheric air, **characterized in that** the air is compressed air which is blown towards the brazing cord (5) at a pressure of between 1 and 2 bar and in a direction coaxial with that of the filler metal wire (4).

2. A method of brazing according to claim 1, **characterized in that** the compressed air is obtained by means of a compressor sucking in atmospheric air.

3. Installation for carrying out the process according to one of claims 1 and 2 comprising a laser device and a device (6) for holding and feeding the filler metal wire (4), **characterised in that** the device (6) for holding and feeding the filler metal wire (4) incorporates a nozzle (7) for blowing air at a pressure of between 1 and 2 bars in a direction coaxial with that of the filler wire connected to a source of compressed air.

4. Installation according to claim 3, **characterised in that** said device (6) comprises a head (8) having an axial channel for guiding the filler metal wire (4), this head (8) being surrounded by a casing (9) separated from this head (8) by an annular chamber (10) having an inlet which is connected to the compressed air source and an annular outlet (10a) situated upstream of the end of said head (8) relative to the direction of flow of the compressed air.

5. Application of the process according to one of claims 1 and 2 or of the installation according to one of claims 3 or 4 to the laser brazing of two sheet metal parts (1, 2) of the body of a motor vehicle.
